**Europäisches Patentamt**

**European Patent Office**

**Office européen des brevets**

(11) Veröffentlichungsnummer: **0 424 552 A1**

## (12) EUROPÄISCHE PATENTANMELDUNG

(21) Anmeldenummer: 89119607.3

(51) Int. Cl.5: **E01B 1/00**

(22) Anmeldetag: 23.10.89

(43) Veröffentlichungstag der Anmeldung:
**02.05.91 Patentblatt 91/18**

(84) Benannte Vertragsstaaten:
**AT BE CH DE ES FR GB IT LI NL SE**

(71) Anmelder: **Zeiss, Karl Reinhard**
**Feldbergstrasse 24G**
**W-7800 Freiburg(DE)**

Anmelder: **Degen, Paul**
**Butzengrabenweg 21**
**W-7582 Bühlertal(DE)**

(72) Erfinder: **Zeiss, Karl Reinhard**
**Feldbergstrasse 24G**
**W-7800 Freiburg(DE)**
Erfinder: **Degen, Paul**
**Butzengrabenweg 21**
**W-7582 Bühlertal(DE)**

(74) Vertreter: **Roesner, Werner**
**Geierfeld 45**
**W-6232 Bad Soden-Altenhain(DE)**

(54) Verfahren zur Verfestigung von Schotterbetten und anderen Haufwerkgebilden.

(57) Das Verfahren sieht vor, daß ein bei Umgebungstemperatur fließflähiger Kleber (12) zunächst durch Abkühlung in den festen Aggregatzustand (10) gebracht wird. Die Aufbringung von flüssigem Kleber auf das Haufwerkgebilde wird dann zeitlich dosiert durch das Auftauen des gekühlten Klebers.

## Fig. 1

EP 0 424 552 A1

# VERFAHREN ZUR VERFESTIGUNG VON SCHOTTERBETTEN UND ANDEREN HAUFWERKGEBILDEN

Die Erfindung betrifft ein Verfahren zur Verfestigung von Schotterbetten und anderen Haufwerkgebilden in situ mittels eines bei Umgebungstemperatur fließfähigen Klebers.

Ein solches Verfahren kommt überall dort vorteilhaft zur Anwendung, wo lose oder bereits z. B. durch Rütteln und Stampfen teilweise verfestigte Schüttungen und poröse bzw. offenzellige Haufwerkgebilde über eine bestimmte Höhe vertikal verbunden werden sollen, wobei der hierfür verwendete fließfähige Kleber von der Oberfläche bis in eine bestimmte Tiefe eindringt, bevor er fest wird und bindet. Besonders wichtig ist die Verfestigung der Schotterbetten von Gleisanlagen der Eisenbahn die u. a. als Schallabsorber dienen und durch die sehr hohen Geschwindigkeiten moderner Reisezüge gefährdet sind. Das Verfahren kann aber auch angewendet werden, um z. B. Bauuntergründe, Behelfsstraßen und Behelfsflugplätze zu verfestigen.

Begießt man derartige Haufwerkgebilde mit Klebern höherer Viskosität, so dringen diese nicht tief genug ein und verschließen die äußeren Poren, so daß die Schallabsorber-und Dränageeigenschaft verloren geht. Wenn der Kleber jedoch dünnflüssig ist, dann fließt er sehr schnell nicht nur nach unten weg, sondern auch seitlich fort und geht damit in großer Menge für den zu verfestigenden Bereich verloren. Andererseits hat die Verwendung niederviskoser Kleber den Vorteil, daß diese auch in sehr kleine Poren und schmale Spalte eindringen und somit dafür sorgen, daß die Partikel des Haufwerkgebildes an einer größeren Zahl von Berührungsstellen miteinander verklebt werden.

Selbst wenn man davon ausgeht, daß sich für die Verbindung der Partikel eines bestimmten Haufwerkgebildes bis in eine bestimmte Tiefe jeweils eine ganz bestimmte Viskosität des Klebers herstellen läßt, so bleiben die weiteren Schwierigkeiten, daß sich mit der Viskosität normalerweise auch die über der Zeit aufgetragene Viskositätskurve beim Aushärten des Klebers ändert und vor allem, daß bei der praktischen Anwendung keine gleichmäßigen Bedingen herrschen, weil das Material, die Porosität, die Temperatur und andere Parameter Schwankungen unterliegen, die einen großen Einfluß auf die Qualität der Verfestigung haben, wenn man einen Kleber gleichbleibender Viskosität im flüssigen Zustand auf das Haufwerkgebilde gießt oder sprüht.

Der Erfindung liegt daher die Aufgabe zugrunde, ein Verfahren bereitzustellen, welches es besser als bisher gestattet, Haufwerkgebilde mit möglichst geringem Binderanteil vertikal bis in eine vorbestimmte Tiefe zu verfestigen.

Vorstehende Aufgabe wird erfindungsgemäß dadurch gelöst, daß der Kleber zunächst durch Abkühlung in den festen Aggregatzustand gebracht und die Aufbringung von flüssigem Kleber auf das Haufwerk zeitlich dosiert wird durch das Auftauen des gekühlten Klebers.

Die Erfindung bietet den Vorteil, daß sich das langsame Einsickern des Klebers in das Haufwerk zeitlich und räumlich bes ser beeinflussen läßt als ein momentaner Aufguß. Außerdem ist der langsame Sickervorgang ohnehin gegenüber Schwankungen des Materials und der Arbeitsbedingungen unempfindlicher als das bisher praktizierte Aufgießen bzw. Aufspritzen. Man kann, um ein bestimmtes Arbeitsergebnis zu erhalten, die gebrauchte Menge des teueren Klebers genauer bemessen und, wie nachstehend noch näher erläutert wird, auch wegen der stattfindenden physikalischen Vorgänge beim Sickervorgang wesentlich verringern. Dadurch bleibt auch trotz des Verklebens der Partikel des Haufwerks dessen Porosität praktisch unverändert, denn in den meisten Fällen erreicht man die angestrebte Verfestigung bereits mit einer Menge Kleber, die etwa bei 1 bis 50 Promille des Gewichts der damit gebundenen Partikel des Haufwerks beträgt. Oft genügen sogar etwa 5 bis 10 Promille.

Als Kleber kommen grundsätzlich alle auch bisher schon zu demselben Zweck in Betracht gezogenen Materialien in Frage. Es handelt sich normalerweise um Reaktionskunststoffe auf der Basis von z. B. Epoxydharzen, Methacrylaten, Polyurethan, Siliconharzen und anderen Kunststoffen, deren Harz-Härter-Gemisch in bekannter Weise für das erfindungsgemäße Verfahren und den jeweils beabsichtigten Anwendungsfall auf eine bestimmte Viskosität, Topf-Abbindezeit und bestimmte Endeigenschaften eingestellt werden kann.

Außer Kunstharzklebern kann ggf. auch Teer oder eine bituminöse Masse als Kleber verwendet werden, wobei dieses Ausführungsbeispiel zeigt, daß mit der oben erwähnten Umgebungstemperatur nicht notwendigerweise die normalerweise herrschende Temperatur der umgebenden Atmosphäre gemeint ist, sondern auch eine künstlich erzeugte höhere oder niedrigere Temperatur, bei welcher der jeweils verwendete Kleber zunächst die gewünschte Viskosität hat, um ausreichend tief in die Poren des Haufwerkgebildes einzudringen. Die Fließfähigkeit von Teer und Bitumen nach dem Auftauen kann z. B. durch Er wärmung der oberen Schichten des Haufwerkgebildes vor und/oder nach dem Aufbringen des Bindemittels gefördert werden, und bei der Abkühlung verfestigt sich dann auch der bituminöse Kleber.

In bevorzugter Ausgestaltung des erfindungsgemäßen Verfahrens wird der Kleber in Form von Pulver, Granulat oder kleinen Stücken auf das Haufwerkgebilde aufgebracht, um dann dort langsam aufzutauen. Der Kleber kann auf einfache Weise dadurch in den festen Aggregatzustand gebracht werden, daß man ihn im flüssigen Zustand in ein kryogenes Flüssiggas, z. B. flüssigen Stickstoff, einfließen läßt. Durch dieses Abschrecken findet gleichzeitig auch eine Granulierung statt. Eine andere Möglichkeit besteht darin, den Kleber in Form größerer Blöcke abzukühlen und diese dann zu kleineren Stücken zu zertrümmern oder zu malen. Die gefrorenen Stücke bzw. das Klebergranulat können gekühlt gelagert werden und lassen sich dann bei der Anwendung in gewünschter Schichtstärke auf die Oberseite des zu verfestigenden Haufwerks aufschütten, wobei sich die Schichtstärke des Klebers nach der gewünschten Eindringtiefe richtet.

Um den Vorgang des Auftauens des Klebers zu verlängern, wird er in weiterer bevorzugter Ausführung des erfindungsgemäßen Verfahrens mit einer isolierenden oder Kälteschicht überdeckt, die z. B. aus gefrorenem Kohlendioxyd in kleinstückiger oder Granulatform bestehen kann. Die Kälteschutzschicht verhindert, daß die Kleberschicht durch Wärmeeinwirkung an ihrer Oberseite zu schnell antaut und ggf. seitlich wegfließt. Ebenfalls zur Verzögerung des Auftauens kann in weiterer bevorzugter Ausführung der Erfindung wenigstens der Oberflächenbereich des Haufwerkgebildes vor dem Aufbringen des Klebers durch ein flüssiges oder gasförmiges Kühlfuid gekühlt werden.

Nach dem Aufbringen des festen Klebers auf das Haufwerkgebil de beginnt er durch die Temperaturdifferenz zu diesem langsam aufzutauen. Je nach Viskosität des verflüssigten Klebers und der Auftaugeschwindigkeit ergibt sich eine Migrationsströmungsgeschwindigkeit, die auf jeden Fall sehr viel langsamer ist als beim momentanen Aufgießen derselben Menge desselben Klebers auf das Haufwerk. Da bei einer bestimmten Viskosität und einem bestimmten Strömungskanal der Strömungswiderstand abhängig ist vom Quadrat der Strömungsgeschwindigkeit, ergibt sich als Folge der erfindungsgemäß erzielten niedrigen Sickergeschwindigkeit ein ganz wesentlich niedrigerer Strömungswiderstand beim Eindringen in das Haufwerk in senkrechter Richtung mit der weiteren Konsequenz, daß der langsam nach unten sickernde flüssige Kleber nicht seitlich wegfließt, wie dies beim Aufgießen von flüssigem Kleber auf ein Haufwerk wegen des dann der hohen Strömungsgeschwindigkeit entsprechenden hohen Strömungswiderstands in vertikaler Richtung der Fall ist.

Da bei dem erfindungsgemäßen Verfahren grundsätzlich alle Kleber, unabhängig von ihrer Viskosität, nur verhältnismäßig langsam entsprechend der steuerbaren Auftaugeschwindigkeit in das Haufwerkgebilde eindringen, können vorzugsweise verhältnismäßig dünnflüssige bzw. niederviskose Kleber Verwendung finden. Während diese in die Hohlräume des Haufwerkgebildes einsickern, sind sie den Kapillarkräften ausgesetzt, die sie insbesondere in die engen Poren und Spalte, insbesondere zu den Berührungsstellen der Schottersteine oder anderen Haufwerkpartikel ziehen. Gerade diese Wirkung wird erfindungsgemäß angestrebt, da es für den verfolgten Zweck nur darauf ankommt, die Haufwerkteile an ihren Berührungsstellen miteinander zu verkleben, aber das Ausfüllen der inneren Hohlräume des Haufwerks nach Möglichkeit zu vermeiden, um dessen Eigenschaften zu erhalten und Kleber zu sparen.

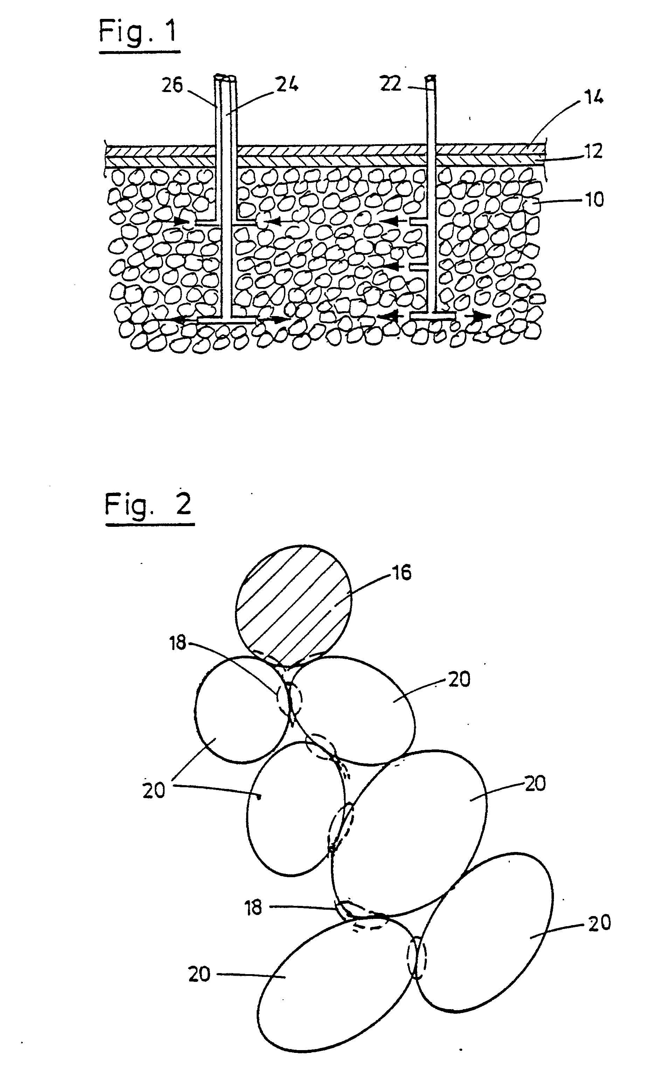

An dieser Stelle sei auf die Darstellung des erfindungsge mäßen Verfahrens in der Zeichnung eingegangen, welche in Fig. 1 ein Haufwerkgebilde mit einer darauf aufgebrachten Schicht festen Klebers und in Fig. 2 den Vorgang des Einsickerns des aufgetauten Klebers in das Haufwerkgebilde zeigt. Dabei ist das Haufwerkgebilde mit 10, die aufgebrachte Schicht festen Klebers mit 12 und eine darüber aufgebrachte Kälteschutzschicht mit 14 bezeichnet. Gemäß Fig. 2 taut ein mit 16 bezeichnetes Korn oder Stück fest gefrorenen Klebers langsam auf und sondert nacheinander Tropfen 18 ab, die mit nur geringen Abweichungen um die mit 20 bezeichneten Schottersteine oder anderen Haufwerkteile herum ziemlich genau in vertikaler Richtung in das Haufwerkgebilde eindringen und dabei vor allem infolge Kapillarwirkung die Berührungsstellen der Schottersteine 20 benetzen. Dieser Vorgang geht langsam von statten, denn wie anhand von Fig. 2 ohne weiteres verständlich ist, wird z. B. ein erster abgetauter Tropfen 18 durch die Kapillarwirkung an einer Berührungsstelle der obersten Schottersteine 20 festgehalten. Erst wenn bei weiterem Auftauen des festen Kleberstücks 16 ein weiterer Tropfen nachfließt, halten die Kapillarkräfte die nunmehr größere Menge flüssigen Klebers an der obersten Berührungsstelle der Schottersteine 20 nicht mehr, so daß von dieser Stelle ein Tropfen abgegeben wird, der weiter nach unten sickert, bis ihn wiederum Kapillarkräfte an einer weiter unten gelegenen Berührungsstelle zwischen Schottersteinen 20 festhalten. Dieser Vorgang setzt sich fort, bis der ganze gefrorene Kleber aufgetaut ist, wobei die Menge des Klebers bei einem bestimmten Haufwerkgebilde die Anzahl der vertikal untereinander liegenden, miteinander verklebten Berührungsstellen der Haufwerkteile und damit die Eindringtiefe bestimmt.

Wie ebenfalls durch Fig. 2 verdeutlicht wird, werden selbst extrem dünnflüssige Klebematerialien tropfenweise, also mit geringster Strömungsgeschwindigkeit eingebracht, bei denen optimales Eindringvermögen und bestmögliche Ausnutzung der Kapillaraktivität miteinander verbunden sind.

In bestimmten Fällen kann es zweckmäßig sein, die langsamen Fließbewegungen des flüssigen Klebers innerhalb der Hohlräume des Haufwerkgebildes noch zusätzlich durch Gasströme zu beeinflussen, wobei durch die Temperatur und die Strömungsgeschwindigkeit des Gases sowie dessen Strömungsrichtung auf den einsickernden Kleber Einfluß genommen werden kann. Fig. 1 zeigt zu diesem Zweck nur beispielhaft Rohre 22, 24 und 26, die in das Haufwerkgebilde eingeführt worden sind und eine Vielzahl von Lufteintritts- und/oder -austrittsöffnungen haben, so daß je nach Anwendungsfall z. B. heiße oder kalte Luft in die Hohlräume des Haufwerkgebildes gepumpt oder daraus abgesaugt werden kann, welche im Bereich des einsickernden flüssigen Klebers wahlweise dessen Strömung entgegengerichtet ist, um sie noch weiter zu verzögern, oder gleichgerichtet ist, um das Eindringen in größere Tiefen zu erleichtern, oder schließlich dazu bestimmt ist, seitliche Fließbewegungen des Klebers zu fördern oder zu verhindern. Gleichzeitig kann durch die Gasströmung z. B. ein bituminöser Kleber auf eine erhöhte Umgebungstemperatur gebracht werden oder ein Kunststoffkleber auf einer niedrigeren Umgebungstemperatur gehalten werden, um das Aushärten zu verzögern.

Grundsätzlich bietet das erfindungsgemäße Verfahren die Möglcihkeit, Schotterbetten und andere Haufwerkgebilde mehr als etwa 15 cm tief zu verfestigen, ohne die Porosität wesentlich zu beeinträchtigen.

## Ansprüche

1. Verfahren zur Verfestigung von Schotterbetten und anderen Haufwerkgebilden mittels eines bei Umgebungstemperatur fließfähigen Klebers, **dadurch gekennzeichnet**, daß der Kleber zunächst durch Abkühlung in den festen Aggregatzustand gebracht und die Aufbringung von flüssigem Kleber auf das Haufwerkgebilde zeitlich dosiert wird durch das Auftauen des gekühlten Klebers.

2. Verfahren nach Anspruch 1, dadurch **gekennzeichnet**, daß der Kleber in Form von Pulver, Granulat oder kleinen Stücken auf das Haufwerkgebilde aufgebracht wird.

3. Verfahren nach Anspruch 1 oder 2, **dadurch gekennzeichnet**, daß der Vorgang des Auftauens des Klebers verlängert wird, indem er mit einer isolierenden oder Kälteschicht überdeckt wird.

4. Verfahren nach Anspruch 2 oder 3, **dadurch gekennzeichnet**, daß wenigstens der Oberflächenbereich des Haufwerkgebildes vor dem Aufbringen des festen Klebers durch ein flüssiges oder gasförmiges Kühlfluid gekühlt wird.

5. Verfahren nach einem der Ansprüche 1 bis 4, **dadurch gekennzeichnet**, daß während des Auftauens und Eindringens des Klebers in das Haufwerkgebilde in diesem ein Gasstrom erzeugt wird.

## Fig. 1

## Fig. 2

Europäisches
Patentamt

# EUROPÄISCHER RECHERCHENBERICHT

Nummer der Anmeldung

EP 89 11 9607

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-2 553 445 (WELLINGTON)<br>* Seite 2, Zeilen 1-9; Seite 2, Zeile 22 - Seite 4, Zeile 10; Anspruch 1; Figur 1 *<br>--- | 1 | E 01 B 1/00 |
| A | DE-A-2 063 727 (MICHELFELDER)<br>* Seite 2, Zeile 23 - Seite 3, Zeile 14; Seite 4, Zeile 25 - Seite 6, Zeile 21; Anspruch 1; Figuren 1-3 *<br>--- | 1 | |
| A | FR-A-2 246 693 (TARMAC)<br>--- | | |
| E | DE-A-3 821 963 (ZEISS)<br>* Ganze Dokument *<br>----- | 1-5 | |

RECHERCHIERTE
SACHGEBIETE (Int. Cl.5)

E 01 B
E 01 C
E 02 D

Der vorliegende Recherchenbericht wurde für alle Patentansprüche erstellt

| Recherchenort | Abschlußdatum der Recherche | Prüfer |
|---|---|---|
| DEN HAAG | 21-06-1990 | BELLINGACCI F. |